(19)

**Europäisches Patentamt**
**European Patent Office**
**Office européen des brevets**

(11) **EP 4 588 551 A1**

(12) **EUROPEAN PATENT APPLICATION**

(43) Date of publication:
**23.07.2025 Bulletin 2025/30**

(21) Application number: **25150700.0**

(22) Date of filing: **08.01.2025**

(51) International Patent Classification (IPC):
*B01D 61/02* (2006.01)    *B01D 61/06* (2006.01)
*B01D 61/08* (2006.01)    *B01D 61/12* (2006.01)
*C02F 1/44* (2023.01)

(52) Cooperative Patent Classification (CPC):
**C02F 1/441; B01D 61/025; B01D 61/06;**
**B01D 61/08; B01D 61/12; C02F 1/001; C02F 1/76**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.01.2024 IT 202400001017**

(71) Applicant: **G.D.G. Engineering S.r.l.**
**00142 Roma (RM) (IT)**

(72) Inventors:
• **Cotelli, Angelo**
**00142 Roma (IT)**
• **Lo Piparo, Giuseppe**
**00142 Roma (IT)**
• **Sottile, Giovanni**
**00142 Roma (IT)**

(74) Representative: **Garavelli, Paolo**
**A.BRE.MAR. S.R.L.**
**Consulenza in Proprietà Industriale**
**Via Servais 27**
**10146 Torino (IT)**

(54) **REVERSE OSMOSIS FILTRATION PLANT**

(57)    A plant (20) is described for the at least partial elimination treatment of polluting substances dissolved in water, of the type based on the reverse osmosis phenomenon and comprising: an adduction duct (21) for introducing into the plant (20) water to be treated; first pre-treatment means (22, 23) comprising a pre-filtration device (22) of the sediment type, and a chlorine absorber (23); second pumping means (24) to activate the circulation of the water to be treated; an osmotic membrane filter element (25) which, through the reverse osmosis phenomenon, separates the path of the treated water into a first duct (26) and a second duct (27); wherein, through the first duct (26), the permeate is collected, i.e. the water freed at least in part from the dissolved substances before treatment; and through the second duct (27) the concentrate is collected, i.e. the residual water with the majority of the substances dissolved before the treatment.

Fig. 2

EP 4 588 551 A1

**Description**

The present invention refers to a water treatment plant based on the reverse osmosis phenomenon.

Reverse osmosis is the process in which solvent molecules are forced to pass from a more concentrated solution to a less concentrated solution. This is achieved by applying a pressure greater than the osmotic pressure to the more concentrated solution. In reverse osmosis, a membrane retains the solute on one side and prevents its passage, allowing the pure solvent to be obtained from the other. This phenomenon requires the performance of mechanical work equal to that necessary to cancel the effect of osmotic pressure.

Reverse osmosis is used in water treatment both for the desalination and for the removal of traces of phosphates, calcium and heavy metals, pesticides, radioactive materials and almost all polluting molecules.

The plants currently used for water purification treatment typically include the following components:

- a pre-treatment system with sediment filter and activated carbon filter, necessary for allowing a subsequent effective nanofiltration treatment;
- an electric pump designed to raise the water pressure so as to overcome the characteristic osmotic pressure of the feed water;
- a reverse osmosis treatment element, comprising an osmotic membrane from which a first duct called permeate departs, into which the feed water flows, and a second duct called concentrate also departs, into which the more concentrated solution flows;
- water with a lower quantity of dissolved substances is supplied from the first permeated pipe;
- from the second concentrated pipe, water is supplied with greater dissolved substances which are discarded.

Known plants have various drawbacks:

- the dimensions of the plant are linked to the form factor of the main elements (electric pump, osmotic membrane);
- the reliability of the plant against water loss is linked to the number of connection points and to the preservation over time of the quality of the material with which they are made;

- the clogging of the osmotic membrane filter element is inversely proportional to the flow of the concentrate, as a result of which a high consumption of water is required to have reduced clogging;
- to obtain a high quantity of permeate, several osmotic membrane elements are usually connected in series: in this way, due to pressure drops, the pressure and flow of concentrate are reduced, thus causing early clogging;
- the electro-pumping plant includes a motor and a pump; every time it comes into operation, it generates mechanical and hydraulic backlashes (water hammer) which limit the overall life of the plant.

Object of the present invention is overcoming at least in part the reported drawbacks through a different layout of the filtration plant.

This and other objects, as will be explained below, are achieved with a reverse osmotic filtration plant according to claim 1.

The plant, for the at least partial elimination treatment of polluting substances dissolved in water, is of the type based on the reverse osmosis phenomenon and includes:

- an adduction pipe for introducing the water to be treated into the plant;
- first pre-treatment means;
- second pumping means to activate the circulation of water to be treated;
- an osmotic membrane filter element which, through the phenomenon of reverse osmosis, separates the path of the treated water into a first and a second duct;

wherein:

- the permeate is collected through said first duct, i.e. the water freed at least in part from the dissolved substances before treatment;
- the concentrate, i.e. the residual water with the majority of the substances dissolved before treatment, is collected through said second duct;
- said second pumping means comprise a plurality of electric pumps, each having dimensions smaller than those of a single electric pump with a power equal to the sum of the powers of said plurality of electric pumps;
- a recirculation duct is present, that connects to the second concentrate pipe to put it back into circulation for a new filtration in the osmotic membrane filter element.

Preferred embodiments and non-trivial variations of the present invention form the subject matter of the dependent claims.

It is understood that all attached claims form an integral part of this description.

According to a preferred embodiment, an electronic unit with programmable logic is provided which allows the sequential work to be managed and the electric pumps to be activated gradually, so as to eliminate water hammer.

The present invention substantially resolves the above drawbacks since the motor pumping units are of small diameter and therefore less bulky in height than a single electric pump of the same overall power.

Furthermore, due to this programmable logic electronic unit, the plant is able to eliminate water hammer, with a consequent increase in the reliability and duration of the plant itself.

It will be immediately obvious that countless variations and modifications can be made to what is described (for example relating to shape, dimensions, arrangements and parts with equivalent functionality) without departing from the scope of the invention, as appears from the attached claims.

The present invention will be better described by some preferred embodiments thereof, provided as a non-limiting example, with reference to the attached drawings, in which:

- FIG. 1 shows the diagram of a reverse osmosis filtration plant according to the prior art;
- FIG. 2 shows the diagram of a reverse osmosis filtration plant according to the present invention;
- FIGS. 3(a, b) show the comparison between a pumping device according to the prior art and a pumping device according to the invention;
- FIG. 4 shows a filter element;
- FIG. 5 shows a spirally wound osmotic membrane which constitutes said filtering element.

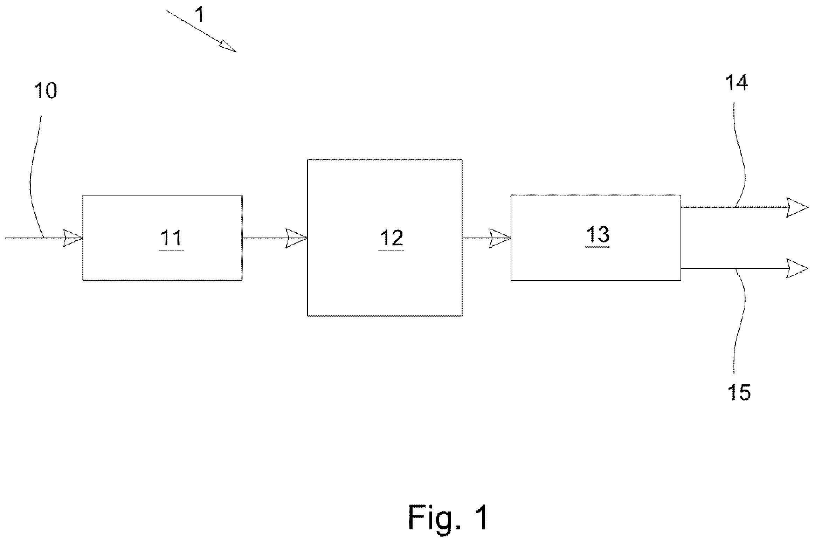

With reference to FIG. 1, (1) indicates the diagram of a reverse osmosis filtration plant according to the known art. This plant (1) includes:

- an adduction pipe (10) for introducing water to be filtered into the plant (1);
- a pre-filtering device (11);
- an electric pump (12) to activate the circulation of the water to be filtered;
- an osmotic membrane filter element (13) which, through the reverse osmosis phenomenon, separates the path of the filtered water into a first duct (14) and a second duct (15).

The permeate is collected through the first duct (14), i.e. water freed at least in part from the dissolved substances before filtration.

The concentrate, i.e. the residual water with the majority of substances dissolved before filtration, is collected through the second duct (15) .

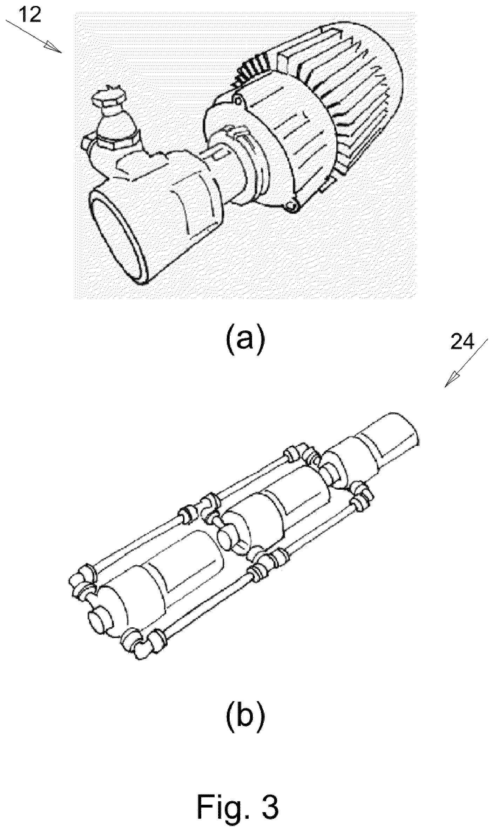

As can be clearly seen from FIG. 1 and 3a, the dimensions of the plant (1) are strongly dependent on the shape and dimensions of the main elements, i.e. the electric pump (12) and the osmotic membrane (13).

Furthermore, the reliability of the plant (1) against water loss is linked to the number of connection points and the maintenance over time of the quality of the material with which they are made.

The clogging of the osmotic membrane filter element (13) is inversely proportional to the flow of the concentrate. As a result, high water consumption is required to achieve reduced clogging. To obtain a high quantity of permeate, several osmotic membrane filter elements are usually connected in series (13); in this way, however, due to pressure losses, the pressure and flow of concentrate are reduced, causing early clogging.

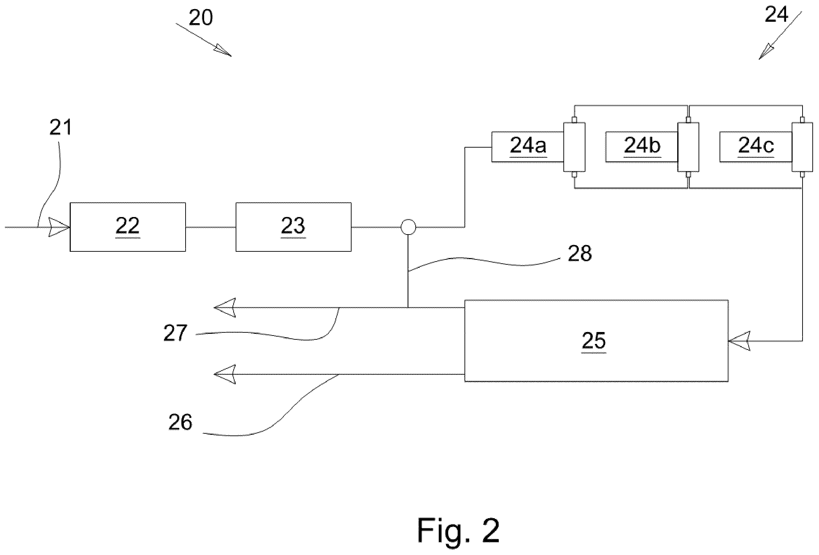

FIG. 2 shows the diagram of a reverse osmosis filtration plant (20) according to the present invention, which strongly reduces the drawbacks just described.

The plant (20) includes:

- an adduction duct (21) into the plant (20) for water to be filtered;
- a sediment pre-filtration device (22);
- a chlorine absorber (23);
- a pumping module (24), composed of a plurality of electric pumps (24a, 24b, 24c), each smaller in size than a single electric pump (12) with a power equal to that of the entire pumping module (24). Above all, said electric pumps (24a, 24b, 24c) are not developed in height, but in width;
- an osmotic membrane module (25);
- a first pipe (26) coming out of the osmotic membrane module (25) for permeate extraction;
- a second pipe (27) coming out of the osmotic membrane module (25) for extracting the concentrate;
- a recirculation duct (28) which connects to the second concentrate pipe (27) to re-introduce it into circulation for a new filtration in the osmotic membrane module (25).

The electric pump shown in the block diagram of FIG. 1 with reference (12) is shown in its actual form in FIG. 3a. FIG. 3b shows the pumping module (24) according to the invention. It can clearly be seen how the use of a plurality of electric pumps (24a, 24b, 24c) allows the overall dimensions of the pumping device to be reduced.

By way of example, if a power of 240 W is required for the operation of the plant (20), it is possible to put together three single 80 W electric pumps, to form a 240W pumping module (24). A single 240 W electric pump (12) has a height of 125 mm, while the 80 W electric pumps have a height of 55 mm and therefore the overall dimensions of the plant (20) according to the invention are reduced.

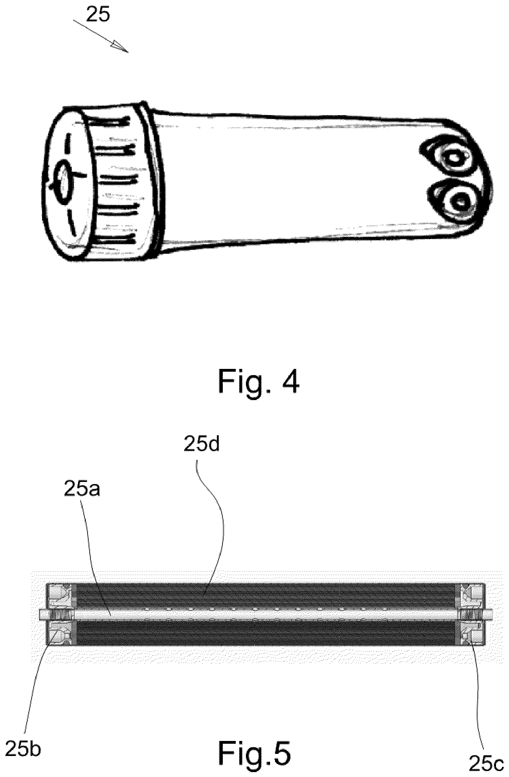

The membrane filter element (25), shown in FIG. 4 and 5, includes:

- a stainless steel cylinder (25a);
- two multifunctional caps (25b, 25c);
- an osmotic membrane (25d) spirally wound on said cylinder (25a).

The cylinder (25a) is perforated to allow the collection of permeate water and machined at the ends to allow the fixing of the two multifunctional caps (25b, 25c); this solution allows for membrane modules (25) of particularly small dimensions and resistant to pressure and water hammer.

The operation of the plant (20) according to the invention is as follows. Water to be filtered enters the plant (20) through the duct (21) and, after having undergone pre-filtration in the device (22) and having been deprived of chlorine in the device (23), is pushed by the battery of electric pumps (24) in the osmotic membrane module (25), in which it is subjected to the main reverse osmosis treatment.

The hydraulic diagram of the present invention, shown in FIG. 2, allows for a high quantity of concentrated flow from the second pipe (27) regardless of the quantity of osmotic membrane filter elements (25). To achieve this, the ducts of the individual osmotic membrane filter elements (25), both for food and concentrate (27) and permeate (26), are connected in parallel; a further duct with calibrated flow rate is added, this duct is defined as recirculation duct (28) and the pumping unit is sized so that:

$$P - s - p = x \quad (x > 0)$$

wherein:

P = pump flow rate
s = waste flow rate
p = permeate flow rate
x = recirculation flow rate

The interconnections of the devices inside the plant take place via stainless steel tubes and ring nuts on the multifunctional caps, allowing the number of connections to be drastically reduced; the absence of O-rings prevents their aging from causing water leaks.

In conventional plants, the value of x is always 0, therefore the flow of water that passes through the membrane corresponds to the waste flow rate. In the present invention, the flow of water that crosses the membrane corresponds to x+s, therefore this flow is not limited to the characteristic of the membrane but can be varied according to the flow rate of the pump, allowing for high quantity flows and allowing to reduce both the consumption of water and of the osmotic membrane.

An electronic unit with programmable logic (not shown) is also provided, which allows managing the sequential work of the individual pumping elements and therefore drastically reduces backlashes and water hammer and calibrates energy consumption to the actual need for water produced; furthermore, the control electronics can acquire data on conductivity, temperature, flow rates and any presence of leaks; it also implements control strategies on inlet, drain and recirculation solenoid valves, in order to obtain the desired water production under all conditions.

## Claims

1. Plant (20) for an at least partial elimination treatment of polluting substances dissolved in water, of a type based on the reverse osmosis phenomenon and comprising:

   - an adduction pipe (21) for introducing the water to be treated into the plant (20);
   - first pre-treatment means (22, 23), said first pre-treatment means comprising a pre-filtration device (22), said pre-filtration device (22) being of the sediment type, and said first means pre-treatment plant including a chlorine absorber (23);
   - second pumping means (24) to activate the circulation of the water to be treated;
   - an osmotic membrane filter element (25) which, through the reverse osmosis phenomenon, separates the path of the treated water into a first duct (26) and a second duct (27);

   wherein:

   - the permeate is collected through said first duct (26), i.e. water freed at least in part from the dissolved substances before treatment;
   - through said second duct (27) the concentrate is collected, i.e. the residual water with the majority of the substances dissolved before treatment;

   **characterized in that** said second pumping means (24) comprise a plurality of electric pumps (24a, 24b, 24c), each having dimensions smaller than those of a single electric pump (12) with a power equal to the sum of the powers of said plurality of electric pumps (24a, 24b, 24c), said electric pumps (24a, 24b, 24c) not being developed in height, but in width; and said osmotic membrane filter element (25) includes:

   - a cylinder (25a);
   - two multifunctional caps (25b, 25c);
   - an osmotic membrane (25d) spirally wound on said cylinder (25a);

   wherein said cylinder (25a) is perforated to allow the collection of permeate water and machined at the ends to allow fixing the two multifunctional caps (25b, 25c).

2. Plant (20) according to claim 1, **characterized in that** it further comprises a recirculation duct (28) which is inserted onto the second pipe (27) of the concentrate to reintroduce it into circulation for a new filtration in the filtering element with osmotic membrane (25).

3. Plant (20) according to any one of claims 1 to 2, **characterized in that** it further has an electronic unit with programmable logic, suitable for managing the sequential work of the individual electric pumps (24a,

**EP 4 588 551 A1**

24b, 24c).

Fig. 1

Fig. 2

12

(a)

24

(b)

Fig. 3

25

Fig. 4

25d

25a

25b

Fig.5

25c

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 98/23361 A1 (KEEFER BOWIE [CA]) 4 June 1998 (1998-06-04) * page 13, line 1 - page 40, line 5; figures 1-2 * ----- | 1-3 | INV. B01D61/02 B01D61/06 B01D61/08 B01D61/12 C02F1/44 |
| Y | US 2008/156731 A1 (GORDON ANDREW W [US]) 3 July 2008 (2008-07-03) * paragraphs [0146] - [0357]; figure 8 * ----- | 1-3 | |
| Y | EP 2 536 484 B1 (FLUID EQUIPMENT DEV CO LLC [US]) 11 April 2018 (2018-04-11) * paragraphs [0025] - [0056]; figure 5 * ----- | 3 | |

TECHNICAL FIELDS
SEARCHED        (IPC)

B01D
C02F

The present search report has been drawn up for all claims

| Place of search | Date of completion of the search | Examiner |
|---|---|---|
| The Hague | 11 June 2025 | Thibault, Valerie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                     EP 25 15 0700

This annex lists the patent family members relating to the patent documents cited in  the above-mentioned European search report.
The members are as contained in the European Patent Office EDP file on
The European Patent Office is in no way liable for these particulars which are merely given for the purpose of information.

11-06-2025

| Patent document cited in search report | | Publication date | Patent family member(s) | | Publication date |
|---|---|---|---|---|---|
| WO 9823361 | A1 | 04-06-1998 | AU | 5112398 A | 22-06-1998 |
| | | | WO | 9823361 A1 | 04-06-1998 |
| US 2008156731 | A1 | 03-07-2008 | NONE | | |
| EP 2536484 | B1 | 11-04-2018 | AU | 2011218305 A1 | 06-09-2012 |
| | | | EP | 2536484 A1 | 26-12-2012 |
| | | | ES | 2668228 T3 | 17-05-2018 |
| | | | KR | 20130009768 A | 23-01-2013 |
| | | | SG | 183325 A1 | 27-09-2012 |
| | | | US | 2011198290 A1 | 18-08-2011 |
| | | | WO | 2011103088 A1 | 25-08-2011 |

EPO FORM P0459

For more details about this annex : see Official Journal of the European Patent Office, No. 12/82